# EUROPEAN PATENT APPLICATION

(11) **EP 4 838 562 A1**
(43) Date of publication of application: **11.11.2026**
(21) Application number: 25745351.4
(22) Date of filing: 23.01.2025
(51) Int. Cl.: H01M 4/04, B21B 27/02, B21B 27/10

(54) **ELECTRODE SHEET HOT ROLLING APPARATUS AND ELECTRODE SHEET HOT ROLLING METHOD**

(30) Priority: 26.01.2024 KR 20240012511
(71) Applicant: LG Energy Solution, Ltd., Seoul 07335 (KR)
(72) Inventor: CHOI, Jung Keun, Daejeon 34122 (KR); LEE, Young Jae, Daejeon 34122 (KR)
(74) Representative: Plasseraud IP
(86) International application number: PCT/KR2025/001317
(87) International publication number: WO 2025/159527

(57) **Abstract**

The present invention provides an electrode sheet hot rolling apparatus including: a rolling roller 100 rolling an electrode sheet 50; and a first heater 120 heating the rolling roller 100 to elevate a temperature of a surface of the rolling roller 100 in contact with the electrode sheet 50 to a first temperature T1. The rolling roller 100 is a crown roller such that a radius of a first cross-section at a central portion in an axial direction of the rolling roller 100 is greater than a radius of a second cross-section at one end portion in the axial direction of the rolling roller 100 and a radius of a third cross-section at the other end portion in the axial direction of the rolling roller 100. The rolling roller 100 may have a first length L in the axial direction, and the first cross-section may have a first diameter D. A crown value N of the rolling roller 100 obtained by subtracting the radius of the second cross-section or the third cross-section from that radius of the first cross-section may be equal to or greater than a first reference value and equal to or smaller than a second reference value greater than the first reference value. The first reference value may be greater than 0. The second reference value may be calculated from equation 1 below: [EQUATION 1] $second reference value = C 1 \frac{{L}^{4}}{{D}^{4}}$ (where C1 is 0.0155 mm, L is the first length, and D is the first diameter).

## Description

### [TECHNICAL FIELD]

This application claims the benefit of priority based on Korean Patent Application No. 10-2024-0012511 filed on January 26, 2024, entire content disclosed in the document of the patent applications is included as a part of this specification.

The present invention relates to an electrode sheet hot rolling apparatus and an electrode sheet hot rolling method capable of rolling an electrode sheet at a high density while maintaining the thickness of the electrode sheet uniform in the widthwise direction thereof, improving the capacity and quality of the electrode and secondary batteries, and providing the appropriate range, optimal range, and optimal value of the crown value of the rolling roller used for hot rolling.

### [BACKGROUND ART]

As the technology development and demand for mobile devices increase, the demand for secondary batteries as an energy source is rapidly increasing, and recently, the use of secondary batteries as a power source for electric vehicles (EVs) and hybrid electric vehicles (HEVs) is being realized, and among such secondary batteries, the demand for secondary lithium batteries with high energy density, high discharge voltage, and output stability is high.

In order to increase the energy density of secondary lithium batteries, the manufacture of electrodes (anode or cathode) with high rolling density is essential. The electrode of a secondary lithium battery may be manufactured by rolling and forming an electrode sheet coated with a composite layer including electrode active material using a rolling apparatus.

Conventionally, the electrode sheet is mainly manufactured by cold rolling. The rolling roller used in cold rolling has a crown with a convex shape at the axial center thereof. This is to ensure that the upper and lower surfaces of the electrode sheet are rolled flat considering the rolling force generated during rolling.

However, recently, there is a trend to use hot rolling, a high-density rolling technology, in order to produce high-capacity, high-efficiency electrodes. When the rolling roller used in hot rolling has a crown, the crown value of the rolling roller used in cold rolling cannot be applied as is. This is because the rolling strengths of the rolling roller are different depending on whether the electrode sheet is subjected to hot rolling or cold rolling, and the degrees of bending/deformation of the rolling roller are different such that the appropriate crown value of the rolling roller is different. Therefore, it is necessary to provide an appropriate crown value of the rolling roller used in hot rolling of the electrode sheet.

Pertinent prior art is Korean Patent Publication No. 1 0-2017-0037100.

### [DISCLOSURE]

### [TECHNICAL PROBLEM]

In order to solve-above-described problems, it is an object of the present invention to provide a spacer seam offset adjustment structure and method capable of preventing a fastening force of a nozzle body required during an assembly process of a coating nozzle from affecting a set position of a spacer. In order to solve-above-described problems, it is an object of the present invention to provide an electrode sheet hot rolling apparatus and an electrode sheet hot rolling method wherein an electrode sheet is rolled at a high density while the thickness of the electrode sheet is uniform in the widthwise direction thereof.

It is an object of the present invention to provide an electrode sheet hot rolling apparatus and an electrode sheet hot rolling method capable of improving the capacity and quality of electrodes and secondary batteries.

It is an object of the present invention to provide an electrode sheet hot rolling apparatus and an electrode sheet hot rolling method providing an appropriate range, optimal range, and optimal value of a crown value of a rolling roller used for hot rolling of an electrode sheet.

It is an object of the present invention to provide an electrode sheet hot rolling apparatus and an electrode sheet hot rolling method wherein a rolling roller has a more appropriate crown value.

It is an object of the present invention to provide an electrode sheet hot rolling apparatus and an electrode sheet hot rolling method with improved rolling uniformity of an electrode sheet.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides an electrode sheet hot rolling apparatus including: a rolling roller 100; and a first heater 120.

The rolling roller 100 may roll an electrode sheet 50.

The rolling roller 100 may be a crown roller.

Accordingly, a radius of a first cross-section at a central portion in an axial direction of the rolling roller 100 may be greater than a radius of a second cross-section at one end portion in the axial direction of the rolling roller 100 and a radius of a third cross-section at the other end portion in the axial direction of the rolling roller 100.

The rolling roller 100 may have a first length L in axial direction.

The first cross-section of the rolling roller 100 may have a first diameter of D.

The crown value N of the rolling roller 100, which is a value obtained by subtracting the radius of the second cross-section or the third cross-section from the radius of the first cross-section, may be equal to or greater than a first reference value and equal to or smaller than a second reference value greater than the first reference value.

The first reference value is greater than 0.

The second reference value has a value calculated by equation 1 below. [EQUATION 1] $second reference value = C 1 \frac{{L}^{4}}{{D}^{4}}$

Here, C1 is 0.0155 mm, L is the first length, and D is the first diameter.

The first heater 120 may heat the rolling roller 100.

The first heater 120 may elevate a temperature of a surface of the rolling roller 100 in contact with the electrode sheet 50 to a first temperature T1.

In one embodiment, the crown value N may be equal to or greater than a third reference value greater than the first reference value, and equal to or smaller than a fourth reference value greater than the third reference value and smaller than the second reference value.

The third reference value and the fourth reference value may have values calculated by equation 2 and equation 3 below, respectively. [EQUATION 2] $third reference value = C 2 \frac{{L}^{4}}{{D}^{4}}$

Here, C2 is 0.0046mm, L is the first length, and D is the first diameter. [EQUATION 3] $fourth reference value = C 3 \frac{{L}^{4}}{{D}^{4}}$

Here, C3 is 0.007mm, L is the first length, and D is the first diameter.

In one embodiment, the crown value N may be an optimal value equal to or greater than the third reference value and equal to or smaller than the fourth reference value.

The optimal value may have a value calculated by equation 4 below. [EQUATION 4] $optimum value = C 4 \frac{{L}^{4}}{{D}^{4}}$

Here, C4 is 0.0058mm, L is the first length, and D is the first diameter.

In one embodiment, the rolling roller 100 may be coupled to a rotating shaft A.

The rolling roller 100 may have two points P1 and P2 in the axial direction supported by the rotating shaft A during rolling.

Shapes of one side portion and the other side portion of the rolling roller 100 may be symmetrical with respect to a midpoint of the two points P1 and P2 in the axial direction.

In one embodiment, the first cross-section may be a cross-section perpendicular to the axial direction at the midpoint.

In one embodiment, the rolling roller 100 may be coupled to the rotating shaft A.

The rolling roller 100 may have two points P1 and P2 in the axial direction supported by the rotating shaft A during rolling.

The second cross-section and the third cross-section may be cross-sections perpendicular to the axial direction at the two points P1 and P2, respectively.

In one embodiment, the rolling roller 100 may be coupled to the rotating shaft A.

The rolling roller 100 may have two points P1 and P2 in the axial direction supported by the rotating shaft A during rolling.

The first length L may correspond to the axial distance between the two points P1 and P2.

In order to solve above-described problems, the present invention provides an electrode sheet hot rolling apparatus including: a rolling roller 100; and a first heater 120.

The rolling roller 100 may roll an electrode sheet 50.

The rolling roller 100 may be a crown roller.

Accordingly, a radius of a first cross-section at a central portion in an axial direction of the rolling roller 100 may be greater than a radius of a second cross-section at one end portion in the axial direction of the rolling roller 100 and a radius of a third cross-section at the other end portion in the axial direction of the rolling roller 100.

The crown value N of the rolling roller 100, which is a value obtained by subtracting the radius of the second cross-section or the third cross-section from the radius of the first cross-section may be equal to or greater than a first reference value and equal to or smaller than a second reference value greater than the first reference value.

The first reference value is greater than 0.

The second reference value may be 20µm.

The first heater 120 may heat the rolling roller 100.

The first heater 120 may elevate a temperature of a surface of the rolling roller 100 in contact with the electrode sheet 50 to a first temperature T1.

In one embodiment, the crown value N may be equal to or greater than a third reference value greater than the first reference value, and equal to or smaller than a fourth reference value greater than the third reference value and smaller than the second reference value.

The third reference value and the fourth reference value may be 6µm and 9µm, respectively.

In one embodiment, the crown value N may be an optimal value equal to or greater than the third reference value and equal to or smaller than the fourth reference value.

The optimal value may be 7.5µm.

In one embodiment, the electrode sheet hot rolling apparatus 10 may further include: a pre-heater 200; and a second heater 220.

The pre-heater 200 may be in contact with the electrode sheet 50.

The pre-heater 200 may preheat the electrode sheet 50.

The second heater 220 may heat the pre-heater 200.

The second heater 220 may elevate a temperature of a surface of the pre-heater 200 in contact with the electrode sheet 50 to a second temperature T2.

The rolling roller 100 may roll the electrode sheet 50 preheated by the pre-heater 200.

In one embodiment, the first temperature T1 may be equal to or higher than the second temperature T2.

In one embodiment, the pre-heater 200 may be a pre-heating roller.

In one embodiment, the first reference value may be 0.001mm.

In order to solve above-described problems, the present invention provides an electrode sheet hot rolling method including: a rolling process S510 of rolling the electrode sheet 50 using the rolling roller 100 having the crown value N equal to or greater than the first reference value and equal to or smaller than the second reference value with a temperature of a surface of the rolling roller 100 elevated to the first temperature T1 by the first heater 120.

In one embodiment, in the rolling process S510, the electrode sheet 50 may be rolled by the rolling roller 100 after pre-heating the electrode sheet 50 by bringing the electrode sheet 50 into contact with a pre-heater 200, a surface temperature of which is elevated to a second temperature T2 by a second heater 220.

### [ADVANTAGEOUS EFFECTS]

According to the spacer seam offset adjustment structure and method of the present invention, the offset adjustment of the spacer seam can be set with very high precision, and the precisely set offset of the spacer seam can be maintained without being affected during an assembly process of the coating nozzle.

According to the embodiments of the present invention, an electrode sheet hot rolling apparatus may include: a rolling roller 100 rolling an electrode sheet 50; and a first heater 120 heating the rolling roller 100 to elevate a temperature of a surface of the rolling roller 100 in contact with the electrode sheet 50 to a first temperature T1. The rolling roller 100 may be a crown roller such that a radius of a first cross-section at a central portion in an axial direction of the rolling roller 100 may be greater than a radius of a second cross-section at one end portion in the axial direction of the rolling roller 100 and a radius of a third cross-section at the other end portion in the axial direction of the rolling roller 100. The rolling roller 100 may have a first length L in the axial direction, and the first cross-section may have a first diameter D. A crown value N of the rolling roller 100, which may be a value obtained by subtracting the radius of the second cross-section or the third cross-section from the radius of the first cross-section may be equal to or greater than a first reference value and equal to or smaller than a second reference value greater than the first reference value. The first reference value may be greater than 0. The second reference value may have a value calculated by equation 1 below. [EQUATION 1] $second reference value = C 1 \frac{{L}^{4}}{{D}^{4}} .$

Here, C1 is 0.0155 mm, L is the first length, and D is the first diameter.

Accordingly, since the electrode sheet 50 is subjected to hot rolling using the rolling roller 100 with crown, the electrode sheet 50 may be rolled at a high density while the thickness of the electrode sheet 50 is uniform in the widthwise direction thereof. Accordingly, the capacity and quality of the electrode and secondary batteries may be improved.

In addition, an appropriate range of the crown value N of the rolling roller 100 used for hot rolling of the electrode sheet 50 may be provided. That is, since the crown value N of the rolling roller 100 used for hot rolling is equal to or greater than the first reference value and equal to or smaller than the second reference value, the electrode sheet 50 may be rolled at a high density while the thickness of the electrode sheet 50 is uniform in the widthwise direction thereof.

According to the embodiments of the present invention, the crown value N may be equal to or greater than a third reference value greater than the first reference value, and equal to or smaller than a fourth reference value greater than the third reference value and smaller than the second reference value. The third reference value and the fourth reference value may have values calculated by equation 2 and equation 3 below, respectively. [EQUATION 2] $third reference value = C 2 \frac{{L}^{4}}{{D}^{4}}$

Here, C2 is 0.0046mm, L is the first length, and D is the first diameter. [EQUATION 3] $fourth reference value = C 3 \frac{{L}^{4}}{{D}^{4}}$

Here, C3 is 0.007mm, L is the first length, and D is the first diameter.

Accordingly, the optimal range of the crown value N of the rolling roller 100 used for hot rolling of the electrode sheet 50 may be provided. That is, since the crown value N of the rolling roller 100 used for hot rolling is equal to or greater than the third reference value and equal to or smaller than the fourth reference value, the electrode sheet 50 may be rolled at a high density while the thickness of the electrode sheet 50 is more uniform in the widthwise direction thereof.

According to the embodiments of the present invention, the crown value N may be an optimal value equal to or greater than the third reference value and equal to or smaller than the fourth reference value. The optimal value may have a value calculated by equation 4 below. [EQUATION 4] $optimum value = C 4 \frac{{L}^{4}}{{D}^{4}}$

Here, C4 is 0.0058mm, L is the first length, and D is the first diameter.

Accordingly, the optimal range of the crown value N of the rolling roller 100 used for hot rolling of the electrode sheet 50 may be provided. That is, since the crown value N of the rolling roller 100 used for hot rolling is the optimal value, the electrode sheet 50 may be rolled at a high density while the thickness of the electrode sheet 50 is more uniform in the widthwise direction thereof.

According to the embodiments of the present invention, the rolling roller 100 may be coupled to a rotating shaft A. Two points P1 and P2 in the axial direction of the rolling roller 100 may be supported by the rotating shaft A during rolling, and shapes of one side portion and the other side portion of the rolling roller 100 may be symmetrical with respect to a midpoint of the two points P1 and P2 in the axial direction.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

According to the embodiments of the present invention, the first cross-section may be a cross-section perpendicular to the axial direction at the midpoint.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

According to the embodiments of the present invention, the rolling roller 100 may be coupled to a rotating shaft A. Two points P1 and P2 in the axial direction of the rolling roller 100 may be supported by the rotating shaft A during rolling. The second cross-section and the third cross-section may be cross-sections perpendicular to the axial direction at the two points P1 and P2, respectively.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

According to the embodiments of the present invention, the rolling roller 100 is coupled to a rotating shaft A. Two points P1 and P2 in the axial direction of the rolling roller 100 may be supported by the rotating shaft A during rolling. The first length L may correspond to the axial direction distance between the two points P1 and P2.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

According to the embodiments of the present invention, an electrode sheet hot rolling apparatus may include: a rolling roller 100 rolling an electrode sheet 50; and a first heater 120 heating the rolling roller 100 to elevate a temperature of a surface of the rolling roller 100 in contact with the electrode sheet 50 to a first temperature T1. The rolling roller 100 may be a crown roller such that a radius of a first cross-section at a central portion in an axial direction of the rolling roller 100 may be greater than a radius of a second cross-section at one end portion in the axial direction of the rolling roller 100 and a radius of a third cross-section at the other end portion in the axial direction of the rolling roller 100. A crown value N of the rolling roller 100, which may be obtained by subtracting the radius of the second cross-section or the third cross-section from the radius of the first cross-section, may be equal to or greater than a first reference value and equal to or smaller than a second reference value greater than the first reference value. The first reference value may be greater than 0. The second reference value may be 20µm.

Accordingly, the electrode sheet 50 may be rolled at a high density while the thickness of the electrode sheet 50 is uniform in the widthwise direction thereof.

According to the embodiments of the present invention, the crown value N may be equal to or greater than a third reference value greater than the first reference value, and equal to or smaller than a fourth reference value greater than the third reference value and smaller than the second reference value. The third reference value and the fourth reference value may be 6µm and 9µm, respectively.

Accordingly, the electrode sheet 50 may be rolled at a high density while the thickness of the electrode sheet 50 is more uniform in the widthwise direction thereof.

According to the embodiments of the present invention, the crown value N may be an optimal value equal to or greater than the third reference value and equal to or smaller than the fourth reference value. The optimal value may be 7.5µm.

Accordingly, the electrode sheet 50 may be rolled at a high density while the thickness of the electrode sheet 50 is more uniform in the widthwise direction thereof.

According to the embodiments of the present invention, the electrode sheet 50 may further include a pre-heater 200 in contact with and preheating the electrode sheet 50; and a second heater 220 heating the pre-heater 200 to elevate a temperature of a surface of the pre-heater 200 in contact with the electrode sheet 50 to a second temperature T2. The rolling roller 100 rolls the electrode sheet 50 preheated by the pre-heater 200.

Accordingly, since the electrode sheet 50 is preheated before being rolled by the rolling roller 100, the temperature of the surface of the rolling roller 100 may be easily and stably maintained at the first temperature T1. Therefore, since the rolling uniformity of the electrode sheet 50 may be improved, the quality of the electrode and secondary batteries may be improved.

According to the embodiments of the present invention, the first temperature T1 may be equal to or higher than the second temperature T2.

Accordingly, since the temperature of the surface of the rolling roller 100 is equal to or higher than that of the surface of the pre-heater 200, the temperature of the surface of the rolling roller 100 may be easily and stably maintained at the first temperature T1. Therefore, since the rolling uniformity of the electrode sheet 50 may be improved, the quality of the electrode and secondary batteries may be improved.

According to the embodiments of the present invention, the pre-heater 200 may be a pre-heating roller.

Accordingly, the electrode sheet 50 may be effectively preheated.

According to the embodiments of the present invention, the first reference value may be 0.001mm.

Accordingly, since the electrode sheet 50 is subjected to hot rolling using the rolling roller 100 with crown, the electrode sheet 50 may be rolled at a high density while the thickness of the electrode sheet 50 is uniform in the widthwise direction thereof.

According to the embodiments of the present invention, the electrode sheet hot rolling method S500 may include a rolling process S510 of rolling the electrode sheet 50 using the rolling roller 100 having the crown value N equal to or greater than the first reference value and equal to or smaller than the second reference value with a temperature of a surface of the rolling roller 100 elevated to the first temperature T1 by the first heater 120.

Accordingly, since the electrode sheet 50 is subjected to hot rolling using the rolling roller 100 with crown, the electrode sheet 50 may be rolled at a high density while the thickness of the electrode sheet 50 is uniform in the widthwise direction thereof. Accordingly, the capacity and quality of the electrode and secondary batteries may be improved.

In addition, since the crown value N of the rolling roller 100 used for hot rolling is equal to or greater than the first reference value and equal to or smaller than the second reference value, the electrode sheet 50 may be rolled at a high density while the thickness of the electrode sheet 50 is uniform in the widthwise direction thereof.

According to the embodiments of the present invention, in the rolling process S510, the electrode sheet 50 may be rolled by the rolling roller 100 after pre-heating the electrode sheet 50 by bringing the electrode sheet 50 into contact with a pre-heater 200, a surface temperature of which is elevated to a second temperature T2 by a second heater 220.

Accordingly, since the electrode sheet 50 is preheated before being rolled by the rolling roller 100, the temperature of the surface of the rolling roller 100 may be easily and stably maintained at the first temperature T1. Therefore, since the rolling uniformity of the electrode sheet 50 may be improved, the quality of the electrode and secondary batteries may be improved.

In addition to the advantageous effects described above, specific effects of the present invention will be described further while describing specific details of the present invention.

### [BRIEF DESCRIPTION OF DRAWINGS]

FIG. 1 is a schematic side surface view of an electrode sheet hot rolling apparatus according to an embodiment of the present invention.
FIG. 2 is a front view illustrating a rolling roller of the hot rolling apparatus of FIG. 1.
FIG. 3 illustrates the rolling roller of FIG. 2 during the rolling of an electrode sheet.
FIG. 4 is a flow chart of an electrode sheet hot rolling method according to an embodiment of the present invention.

### [DESCRIPTION OF REFERENCE NUMERALS]

| | | | |
|---|---|---|---|
| 10: | electrode sheet hot rolling apparatus | | |
| 50: | electrode sheet | | |
| 100: | rolling roller | T1: | first temperature |
| A: | rotating shaft | L: | first length |
| D: | first diameter | K: | crown value |
| 120: | first heater | | |
| 200: | pre-heater | T2: | second temperature |
| 220: | second heater | | |

### [REPRESENTATIVE FIGURE]

FIG. 1

### [DETAILED DESCRIPTION OF THE PREFERRED EMBODIMENTS]

While "first", "second", etc. are used to describe various elements, these elements are of course not limited by these terms. These terms are only used to distinguish one element from another, and unless specifically stated otherwise, a first element may also be a second element.

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

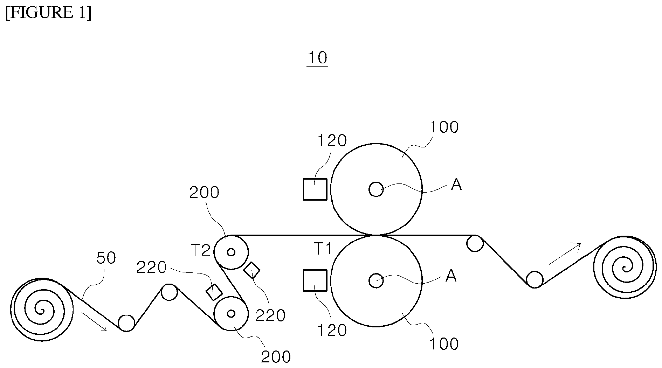

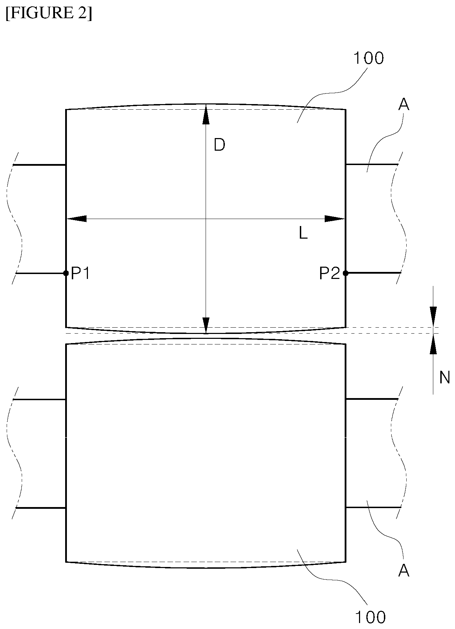

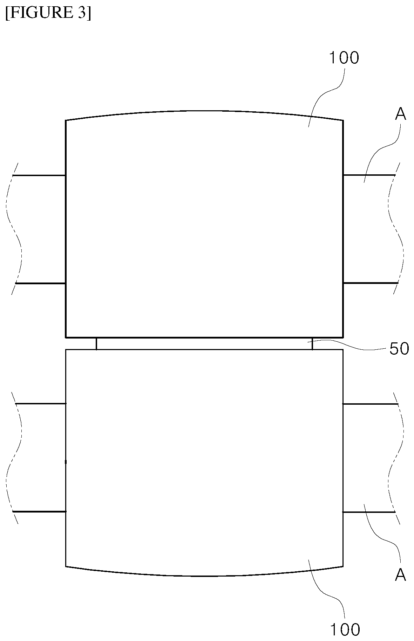

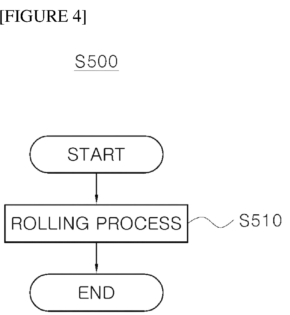

FIG. 1 is a schematic side surface view of an electrode sheet hot rolling apparatus according to an embodiment of the present invention. FIG. 2 is a front view illustrating a rolling roller of the hot rolling apparatus of FIG. 1. FIG. 3 illustrates the rolling roller of FIG. 2 during the rolling of an electrode sheet. FIG. 4 is a flow chart of an electrode sheet hot rolling method according to an embodiment of the present invention.

### [ELECTRODE SHEET HOT ROLLING APPARATUS]

Referring to FIG. 1, an electrode sheet hot rolling apparatus 10 may include a rolling roller 100 and a first heater 120. The electrode sheet hot rolling apparatus 10 may include a pre-heater 200 and a second heater 220.

The rolling roller 100 may roll an electrode sheet 50. Here, the electrode sheet 50 may be a composite layer including an electrode active material applied to a sheet-type electrode collector (electrode foil). The rolling roller 100 will be described later.

The first heater 120 may heat the rolling roller 100. The first heater 120 may elevate a temperature of a surface of the rolling roller 100 in contact with the electrode sheet 50 to a first temperature T1.

The pre-heater 200 may be in contact with the electrode sheet 50. The pre-heater 200 may preheat the electrode sheet 50.

The pre-heater 200 may include a pre-heating roller.

Accordingly, the electrode sheet 50 may be effectively preheated.

The second heater 220 may heat the pre-heater 200. The second heater 220 may elevate the temperature of the surface of the pre-heater 200 in contact with the electrode sheet 50 to the second temperature T2.

The above-described rolling roller 100 may roll the electrode sheet 50 preheated by the pre-heater 200.

Accordingly, since the electrode sheet 50 is preheated before being rolled by the rolling roller 100, the temperature of the surface of the rolling roller 100 may be easily and stably maintained at the first temperature T1. Therefore, since the rolling uniformity of the electrode sheet 50 may be improved, the quality of the electrode and secondary batteries may be improved.

The first temperature T1 may be equal to or higher than the second temperature T2.

Accordingly, since the temperature of the surface of the rolling roller 100 is equal to or higher than that of the surface of the pre-heater 200, the temperature of the surface of the rolling roller 100 may be easily and stably maintained at the first temperature T1. Therefore, since the rolling uniformity of the electrode sheet 50 may be improved, the quality of the electrode and secondary batteries may be improved.

### [ROLLING ROLLER]

Referring further to FIG. 2 and FIG. 3, the rolling roller 100 may be a crown roller known in the art. As a result, a radius of a first cross-section at a central portion in an axial direction of the rolling roller 100 may be greater than a radius of a second cross-section at one end portion in the axial direction of the rolling roller 100 and a radius of a third cross-section at the other end portion in the axial direction of the rolling roller 100.

The rolling roller 100 may have a first length L in axial direction. The rolling roller 100 may have a first diameter D which is the diameter of the first cross-section.

The crown value N of the rolling roller 100 may be a value obtained by subtracting the radius of the second cross-section or the third cross-section from that of the first cross-section. In hot rolling, when the crown value N of the rolling roller 100 is set to an appropriate value, the thickness of the electrode sheet 50 is uniform in the widthwise direction thereof even when the rolling roller 100 is bent/deformed (FIG. 3).

The crown value N of the rolling roller 100 may be equal to or greater than the first reference value and equal to or smaller than the second reference value. The second reference value may be greater than the first reference value.

The first reference value is greater than 0.

The first reference value may be 0.001mm.

Accordingly, since the electrode sheet 50 is subjected to hot rolling using the rolling roller 100 with crown, the electrode sheet 50 may be rolled at a high density while the thickness of the electrode sheet 50 is uniform in the widthwise direction thereof.

The second reference value may have a value calculated by equation 1 below. [EQUATION 1] $second reference value = C 1 \frac{{L}^{4}}{{D}^{4}}$

Here, C1 may be 0.0155mm. L is the first length L. D is the first diameter D. For example, the crown value N of the rolling roller 100 having a first length L of 800mm and a first diameter D of 750mm may be greater than 0 and equal to or smaller than about 20µm (first reference value).

Accordingly, since the electrode sheet 50 is subjected to hot rolling using the rolling roller 100 with crown, the electrode sheet 50 may be rolled at a high density while the thickness of the electrode sheet 50 is uniform in the widthwise direction thereof. Accordingly, the capacity and quality of the electrode and secondary batteries may be improved.

In addition, an appropriate range of the crown value N of the rolling roller 100 used for hot rolling of the electrode sheet 50 may be provided. That is, since the crown value N of the rolling roller 100 used for hot rolling is equal to or greater than the first reference value and equal to or smaller than the second reference value, the electrode sheet 50 may be rolled at a high density while the thickness of the electrode sheet 50 is uniform in the widthwise direction thereof.

Regarding this, since the appropriate rolling strength of the rolling roller 100 may be different depending on whether the electrode sheet 50 is subjected to hot rolling or cold rolling, the degree to which the rolling roller 100 bends/deforms during rolling may be different. Accordingly, the appropriate crown value N of the rolling roller 100 used for hot rolling may be different from that of the rolling roller 100 used for cold rolling. The present invention provides an appropriate crown value N of the rolling roller 100 used for hot rolling.

Meanwhile, the second reference value may be 20µm (micrometer) regardless of equation 1.

Accordingly, the electrode sheet 50 may be rolled at a high density while the thickness of the electrode sheet 50 is uniform in the widthwise direction thereof.

The crown value N may be equal to or greater than the third reference value, which is greater than the first reference value, and equal to or smaller than the fourth reference value, which is greater than the third reference value and smaller than the second reference value.

The third reference value and the fourth reference value may have values calculated by equation 2 and equation 3 below, respectively. [EQUATION 2] $third reference value = C 2 \frac{{L}^{4}}{{D}^{4}}$

Here, C2 may be 0.0046 mm. L is the first length L. D is the first diameter D. [EQUATION 3] $fourth reference value = C 3 \frac{{L}^{4}}{{D}^{4}}$

Here, C3 may be 0.007mm. L is the first length L. D is the first diameter D. For example, the crown value N of a rolling roller 100 having a first length L of 800 mm and a first diameter D of 750 mm may be equal to or greater than approximately 6µm (third reference value) and equal to or smaller than 9µm (fourth reference value).

Accordingly, the optimal range of the crown value N of the rolling roller 100 used for hot rolling of the electrode sheet 50 may be provided. That is, since the crown value N of the rolling roller 100 used for hot rolling is equal to or greater than the third reference value and equal to or smaller than the fourth reference value, the electrode sheet 50 may be rolled at a high density while the thickness of the electrode sheet 50 is more uniform in the widthwise direction thereof.

Meanwhile, the third reference value and the fourth reference value may be 6µm and 9µm regardless of equation 2 and equation 3, respectively.

Accordingly, the electrode sheet 50 may be rolled at a high density while the thickness of the electrode sheet 50 is more uniform in the widthwise direction thereof.

The optimal value of the crown value N may have a value calculated by equation 4 below. [EQUATION 4] $optimum value = C 4 \frac{{L}^{4}}{{D}^{4}}$

Here, C4 may be 0.0058mm. L is the first length L. D is the first diameter D. For example, the crown value N of the rolling roller 100 having a first length L of 800mm and a first diameter D of 750mm may be approximately 7.5µm.

Accordingly, the optimal range of the crown value N of the rolling roller 100 used for hot rolling of the electrode sheet 50 may be provided. That is, since the crown value N of the rolling roller 100 used for hot rolling is the optimal value, the electrode sheet 50 may be rolled at a high density while the thickness of the electrode sheet 50 is more uniform in the widthwise direction thereof.

Meanwhile, the optimal value may be 7.5µm regardless of equation 4.

Accordingly, the electrode sheet 50 may be rolled at a high density while the thickness of the electrode sheet 50 is more uniform in the widthwise direction thereof.

Equation 1, equation 2, equation 3, and equation 4 may be established based on the cross-sectional secondary moment.

The rolling roller 100 may be coupled to a rotating shaft A. The rolling roller 100 may have two points P1 and P2 in the axial direction supported by the rotating shaft A during rolling (FIG. 2).

Shapes of one side portion and the other side portion of the rolling roller 100 may be symmetrical with respect to a midpoint of the two points P1 and P2 in the axial direction.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

This is because equation 1, equation 2, equation 3, and/or equation 4 are established assuming that the shapes of the first side and the second side of the rolling roller 100 are symmetrical with respect to the midpoints of the two points P1 and P2.

The first cross-section may be a cross-section perpendicular to the axial direction at the midpoint.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

This is because equation 1, equation 2, equation 3 and/or equation 4 are established assuming that the first cross-section is perpendicular to the axial direction at the midpoint.

The second cross-section and the third cross-section may be cross-sections perpendicular to the axial direction at the two points P1 and P2, respectively.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

This may be because equation 1, equation 2, equation 3 and/or equation 4 are established assuming that the second cross-section and the third cross-section are perpendicular to the axial direction at the two points P1 and P2, respectively.

The first length L may correspond to the axial distance between the two points P1 and P2.

Accordingly, the second reference value, the third reference value, the fourth reference value and/or the optimal value calculated by equation 1, equation 2, equation 3 and/or equation 4, respectively, may be accurate. As a result, the rolling roller 100 may have a more appropriate crown value N.

This is because equation 1, equation 2, equation 3 and/or equation 4 are established assuming that the first length L corresponds to the axial distance between the two points P1 and P2.

### [ELECTRODE SHEET HOT ROLLING METHOD]

Referring to FIG. 4, the electrode sheet hot rolling method according to an embodiment of the present invention may include a rolling process S510.

In the rolling process S510, the electrode sheet 50 may be rolled by the rolling roller 100 having the crown value N equal to or greater than the first reference value and equal to or smaller than the second reference value. Here, the rolling may be performed with the temperature of the surface of the rolling roller 100 elevated to the first temperature T1 by the first heater 120.

Accordingly, since the electrode sheet 50 is subjected to hot rolling using the rolling roller 100 with crown, the electrode sheet 50 may be rolled at a high density while the thickness of the electrode sheet 50 is uniform in the widthwise direction thereof. Accordingly, the capacity and quality of the electrode and secondary batteries may be improved.

In addition, since the crown value N of the rolling roller 100 used for hot rolling is equal to or greater than the first reference value and equal to or smaller than the second reference value, the electrode sheet 50 may be rolled at a high density while the thickness of the electrode sheet 50 is uniform in the widthwise direction thereof.

Here, the electrode sheet 50 may be rolled by the rolling roller 100 after preheating the electrode sheet 50 with the pre-heater 200. The preheating of the electrode sheet 50 with the pre-heater 200 may be performed while the temperature of the surface of the pre-heater 200 is elevated to the second temperature T2 by the second heater 220.

Accordingly, since the electrode sheet 50 is preheated before being rolled by the rolling roller 100, the temperature of the surface of the rolling roller 100 may be easily and stably maintained at the first temperature T1. Therefore, since the rolling uniformity of the electrode sheet 50 may be improved, the quality of the electrode and secondary batteries may be improved.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode sheet hot rolling apparatus comprising:
a rolling roller 100 rolling an electrode sheet 50; and
a first heater 120 heating the rolling roller 100 to elevate a temperature of a surface of the rolling roller 100 in contact with the electrode sheet 50 to a first temperature T1,
wherein the rolling roller 100 is a crown roller such that a radius of a first cross-section at a central portion in an axial direction of the rolling roller 100 is greater than a radius of a second cross-section at one end portion in the axial direction of the rolling roller 100 and a radius of a third cross-section at the other end portion in the axial direction of the rolling roller 100,
wherein the rolling roller 100 has a first length L in the axial direction, and the first cross-section has a first diameter D,
wherein a crown value N of the rolling roller 100, which is a value obtained by subtracting the radius of the second cross-section or the third cross-section from the radius of the first cross-section, is equal to or greater than a first reference value and equal to or smaller than a second reference value greater than the first reference value,
the first reference value is greater than 0, and
the second reference value has a value calculated by equation 1 below: [EQUATION 1] $second reference value = C 1 \frac{{L}^{4}}{{D}^{4}}$ (where C1 is 0.0155 mm, L is the first length, and D is the first diameter).

2. The electrode sheet hot rolling apparatus of claim 1, wherein the crown value N is equal to or greater than a third reference value greater than the first reference value, and equal to or smaller than a fourth reference value greater than the third reference value and smaller than the second reference value, and
the third reference value and the fourth reference value have values calculated by equation 2 and equation 3, respectively: [EQUATION 2] $third reference value = C 2 \frac{{L}^{4}}{{D}^{4}}$ (where C2 is 0.0046mm, L is the first length, and D is the first diameter) [EQUATION 3] $fourth reference value = C 3 \frac{{L}^{4}}{{D}^{4}}$ (where C3 is 0.007mm, L is the first length, and D is the first diameter).

3. The electrode sheet hot rolling apparatus of claim 2, wherein the crown value N is an optimal value equal to or greater than the third reference value and equal to or smaller than the fourth reference value, and
the optimal value has a value calculated by equation 4 below: [EQUATION 4] $optimum value = C 4 \frac{{L}^{4}}{{D}^{4}}$ (where C4 is 0.0058mm, L is the first length, and D is the first diameter).

4. The electrode sheet hot rolling apparatus of any one of claims 1 to 3, wherein the rolling roller 100 is coupled to a rotating shaft A,
wherein two points P1 and P2 in the axial direction of the rolling roller 100 is supported by the rotating shaft A during rolling, and shapes of one side portion and the other side portion of the rolling roller 100 are symmetrical with respect to a midpoint of the two points P1 and P2 in the axial direction.

5. The electrode sheet hot rolling apparatus of claim 4, wherein the first cross-section is a cross-section perpendicular to the axial direction at the midpoint.

6. The electrode sheet hot rolling apparatus of any one of claims 1 to 3, wherein the rolling roller 100 is coupled to a rotating shaft A,
wherein two points P1 and P2 in the axial direction of the rolling roller 100 is supported by the rotating shaft A during rolling, and
the second cross-section and the third cross-section are cross-sections perpendicular to the axial direction at the two points P1 and P2, respectively.

7. The electrode sheet hot rolling apparatus of any one of claims 1 to 3, wherein the rolling roller 100 is coupled to a rotating shaft A,
wherein two points P1 and P2 in the axial direction of the rolling roller 100 is supported by the rotating shaft A during rolling, and
the first length L corresponds to an axial distance between the two points P1 and P2.

8. An electrode sheet hot rolling apparatus comprising:
a rolling roller 100 rolling an electrode sheet 50; and
a first heater 120 heating the rolling roller 100 to elevate a temperature of a surface of the rolling roller 100 in contact with the electrode sheet 50 to a first temperature T1,
wherein the rolling roller 100 is a crown roller such that a radius of a first cross-section at a central portion in an axial direction of the rolling roller 100 is greater than a radius of a second cross-section at one end portion in the axial direction of the rolling roller 100 and a radius of a third cross-section at the other end portion in the axial direction of the rolling roller 100,
wherein a crown value N of the rolling roller 100, which is a value obtained by subtracting the radius of the second cross-section or the third cross-section from the radius of the first cross-section, is equal to or greater than a first reference value and equal to or smaller than a second reference value greater than the first reference value,
the first reference value is greater than 0, and
the second reference value is 20µm.

9. The electrode sheet hot rolling apparatus of claim 8, wherein the crown value N is equal to or greater than a third reference value greater than the first reference value, and equal to or smaller than a fourth reference value greater than the third reference value and smaller than the second reference value, and
the third reference value and the fourth reference value are 6µm and 9µm, respectively.

10. The electrode sheet hot rolling apparatus of claim 9, wherein the crown value N is an optimal value equal to or greater than the third reference value and equal to or smaller than the fourth reference value, and
the optimal value is 7.5µm.

11. The electrode sheet hot rolling apparatus of any one of claims 1 to 10, further comprising:
a pre-heater 200 in contact with and preheating the electrode sheet 50; and
a second heater 220 heating the pre-heater 200 to elevate a temperature of a surface of the pre-heater 200 in contact with the electrode sheet 50 to a second temperature T2,
wherein the rolling roller 100 rolls the electrode sheet 50 preheated by the pre-heater 200.

12. The electrode sheet hot rolling apparatus of claim 11, wherein the first temperature T1 is equal to or higher than the second temperature T2.

13. The electrode sheet hot rolling apparatus of claim 11, wherein the pre-heater 200 is a pre-heating roller.

14. The electrode sheet hot rolling apparatus of any one of claims 1 to 13, wherein the first reference value is 0.001mm.

15. An electrode sheet hot rolling method using an electrode sheet hot rolling apparatus according to any one of claims 1 to 14, the electrode sheet hot rolling method comprising:
a rolling process S510 of rolling the electrode sheet 50 using the rolling roller 100 having the crown value N equal to or greater than the first reference value and equal to or smaller than the second reference value with a temperature of a surface of the rolling roller 100 elevated to the first temperature T1 by the first heater 120.

16. The electrode sheet hot rolling method of claim 15, wherein in the rolling process S510, the electrode sheet 50 is rolled by the rolling roller 100 after pre-heating the electrode sheet 50 by bringing the electrode sheet 50 into contact with a pre-heater 200, a surface temperature of which is elevated to a second temperature T2 by a second heater 220.
